(19) **Europäisches Patentamt / European Patent Office / Office européen des brevets**

(11) **EP 1 844 374 B1**

(12) **FASCICULE DE BREVET EUROPEEN**

(45) Date de publication et mention de la délivrance du brevet:
**30.05.2012   Bulletin 2012/22**

(51) Int Cl.:
**G05D 1/02** (2006.01)    **G05D 1/06** (2006.01)

(21) Numéro de dépôt: **06709197.5**

(22) Date de dépôt: **30.01.2006**

(86) Numéro de dépôt international:
**PCT/FR2006/000201**

(87) Numéro de publication internationale:
**WO 2006/082301 (10.08.2006 Gazette 2006/32)**

(54) **PROCEDE ET DISPOSITIF POUR DETERMINER LA LARGEUR D'UN CORRIDOR DE SECURITE POUR UN AERONEF, AINSI QUE METHODE ET SYSTEME DE SECURISATION D'UN VOL AUTOMATIQUE A BASSE ALTITUDE D'UN AERONEF**

VERFAHREN UND VORRICHTUNG ZUR BESTIMMUNG DER BREITE EINES SICHERHEITSKORRIDORS FÜR EIN FLUGZEUG UND VERFAHREN UND SYSTEM ZUR SICHERUNG DES AUTOMATISCHEN FLUGS EINES FLUGZEUGS IM UNTEREN LUFTRAUM

METHOD AND DEVICE FOR DETERMINING THE WIDTH OF A SAFETY CORRIDOR FOR AN AIRCRAFT AND METHOD AND SYSTEM FOR SECURING THE AUTOMATIC LOW-ALTITUDE FLIGHT OF AN AIRCRAFT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **01.02.2005   FR 0500983**

(43) Date de publication de la demande:
**17.10.2007   Bulletin 2007/42**

(73) Titulaire: **Airbus SAS**
**31700 Blagnac (FR)**

(72) Inventeurs:
  • **ARTINI, Franck**
    **F-31000 Toulouse (FR)**

  • **CALMELS, Benoît**
    **F-31400 Toulouse (FR)**

(74) Mandataire: **Hauer, Bernard**
    **Gevers France**
    **23bis, rue de Turin**
    **75008 Paris (FR)**

(56) Documents cités:
    **EP-A- 0 937 963      WO-A-00/02009**
    **US-A- 3 018 049      US-A- 4 144 571**
    **US-A- 5 922 031**

**Description**

La présente invention concerne un procédé et un dispositif pour déterminer la largeur d'un corridor de sécurité qui est défini de part et d'autre de la trajectoire latérale d'une trajectoire de vol d'un aéronef, ainsi qu'une méthode et un système de sécurisation d'un vol à basse altitude d'un aéronef qui est guidé automatiquement le long d'une telle trajectoire de vol.

Bien que non exclusivement, la présente invention s'applique plus particulièrement à un avion de transport militaire qui présente un faible rapport poussée/poids et une forte inertie, et dont les temps de manoeuvre sont en général relativement lents.

Dans le cadre de la présente invention, on entend par vol à basse altitude le vol le long d'une trajectoire de vol (à basse altitude) permettant à un aéronef de suivre au plus près le terrain survolé, notamment pour éviter de se faire repérer. Une telle trajectoire de vol à basse altitude est donc située le plus souvent au plus bas à une hauteur du terrain prédéterminée, par exemple 500 pieds (environ 150 mètres).

En raison de cette proximité avec le sol, toute déviation latérale ou verticale vers le bas (au-delà d'une certaine marge de sécurité) de l'aéronef, par rapport à la trajectoire de vol à suivre, lors du guidage de l'aéronef le long de ladite trajectoire de vol, présente un risque important de collision avec le terrain survolé (directement avec le sol ou avec un ouvrage ou un élément situé sur ledit sol). Bien entendu, l'existence d'un tel risque n'est pas acceptable.

Par le document US-5 922 031, on connaît une méthode de pilotage à basse altitude d'un aéronef.

La présente invention a pour objet de sécuriser un vol à basse altitude d'un aéronef (qui est guidé automatiquement le long d'une trajectoire de vol comprenant une trajectoire latérale et une trajectoire verticale) en utilisant un corridor de sécurité de manière à rendre hautement improbable toute collision de l'aéronef avec le terrain survolé.

La présente invention s'applique plus particulièrement à un vol automatique qui est autonome, c'est-à-dire un vol automatique qui est effectué seulement grâce à des systèmes de navigation, de gestion du vol et de guidage et à une base numérique de terrain, qui sont embarqués, sans l'aide d'un quelconque dispositif émissif vers l'avant, tel qu'un radar par exemple. On sait qu'un tel vol automatique autonome peut être soumis à un ensemble d'erreurs concernant notamment :

- la navigation : la position donnée par le système de navigation embarqué n'est pas exactement la position réelle de l'aéronef ;
- le guidage : un pilote automatique asservit la position donnée par le système de navigation sur une trajectoire calculée par le système de gestion du vol. Cet asservissement présente une performance intrinsèque qui traduit l'aptitude du pilote automatique à guider l'aéronef sur la trajectoire demandée. Une erreur de guidage peut également exister lors d'un vol à l'aide d'un directeur de vol que le pilote doit suivre manuellement ;
- la trajectoire de vol : la précision de cette trajectoire dépend de la précision de l'algorithme et du processeur du calculateur utilisé, et également surtout le cas échéant d'une erreur de modélisation numérique du terrain survolé.

Afin de limiter à une probabilité d'occurrence objectif tout risque de collision (catastrophique) avec le terrain environnant, due à un écart latéral de trajectoire résultant en particulier d'une ou plusieurs des erreurs décrites ci-dessus, un corridor de sécurité présentant une largeur particulière suffisante est défini de part et d'autre de ladite trajectoire de vol.

Aussi, la présente invention concerne un procédé pour déterminer la largeur d'un tel corridor de sécurité qui est défini de part et d'autre de la trajectoire latérale d'une trajectoire de vol d'un aéronef.

A cet effet, ledit procédé est remarquable en ce que :

a) on estime une pluralité d'erreurs qui présentent chacune un impact sur un vol automatique (et autonome) à basse altitude de l'aéronef ;
b) on détermine une probabilité d'excursion du corridor de sécurité à ne pas dépasser ; et
c) à partir desdites erreurs et de ladite probabilité d'excursion, on détermine la largeur dudit corridor de sécurité en tenant compte d'au moins une expression mathématique liant ensemble au moins lesdites erreurs, ladite probabilité d'excursion et ladite largeur.

Ainsi, grâce à l'invention, on est en mesure de déterminer un corridor de sécurité qui tient compte des erreurs susceptibles d'influencer un pilotage automatique autonome tel que précité.

De façon avantageuse, à l'étape a), on tient compte d'au moins certaines des erreurs suivantes :

- une erreur de navigation ;
- une erreur de guidage ;
- une erreur de trajectoire de vol.

En outre, avantageusement, lesdites erreurs sont estimées sous forme de densités de probabilité. De préférence, lesdites densités de probabilité vérifient l'une des lois suivantes :

- une loi exponentielle ;
- une loi de Laplace-Gauss ;
- une loi de Poisson ;
- une loi polynomiale.

Par ailleurs, de façon avantageuse, ladite probabilité d'excursion vaut $10^{-8}$/hdv, hdv représentant une heure de vol de l'aéronef.

Avantageusement, dans le cas de deux erreurs différentes et indépendantes au sens probalistique, ladite expression mathématique correspond à :

$$P = 1 - 2\int_{0}^{d}\left(\int_{-\infty}^{+\infty} f1(x).f2(y-x).dx\right).dy \qquad (1)$$

dans laquelle :

- P représente ladite probabilité d'excursion ;
- d représente la moitié de ladite largeur du corridor de sécurité ;
- f1 représente la densité de probabilité concernant une première desdites erreurs ; et
- f2 représente la densité de probabilité concernant la seconde erreur.

En outre, de façon avantageuse, dans le cas de trois erreurs différentes de densités de probabilité individuelles respectives fi, on utilise également ladite expression mathématique (1) permettant de calculer P en fonction de deux densités de probabilité (globales) f1 et f2, f1 correspondant à la densité de probabilité résultant de la somme de deux erreurs de densité de probabilité individuelle fi et f2 à la densité de probabilité individuelle fi de la troisième erreur restante.

En outre, lorsque lesdites erreurs sont exprimées sous forme d'une loi de Laplace-Gauss, de façon avantageuse, la largeur du corridor de sécurité correspond au double de la moyenne quadratique des limites desdites erreurs extrapolées à l'objectif de ladite probabilité d'excursion. Dans ce cas, de préférence, ladite expression mathématique correspond à :

$$d = L(p).\sqrt{\sum_{i=1}^{n} \sigma i^2}$$

dans laquelle :

- d représente la moitié de ladite largeur du corridor de sécurité ;
- L(p) est un coefficient d'expansion qui dépend d'une probabilité p de survenue d'une erreur ; et
- δi est l'écart-type de la distribution gaussienne d'une erreur i.

On notera que si l'on connaît une limite d'erreur à une probabilité p, la loi de Laplace-Gauss permet de déduire l'écart-type σ à partir de la distribution d'erreur. Dans le cas présent, la loi de Laplace-Gauss est entièrement déterminée par le couple ($\mu$, $\sigma$), $\mu$ étant la moyenne de l'erreur, qui est nulle, puisque les erreurs ont une même probabilité de survenir à droite ou à gauche. La limite de cette erreur (correspondant à une certaine probabilité d'en sortir) est obtenue par l'expression L(p).σ. La loi de Laplace-Gauss permet de déterminer le coefficient L(p) pour p compris dans l'intervalle [0, 1]. En général, on connaît les limites d'erreur de navigation, de guidage ou de trajectoire à 95%, ce qui permet de déterminer l'écart-type σ, et ainsi les limites d'erreur à toute autre probabilité.

Par ailleurs, avantageusement, on ajoute à ladite largeur une marge tenant compte notamment de l'envergure de l'aéronef.

Dans un mode de réalisation particulier, on prend en compte au moins une erreur qui est due à une panne d'au moins un système (commandes de vol, moteur, ...) de l'aéronef, une telle panne pouvant induire une déviation latérale supplémentaire. Cette panne survient à une certaine probabilité.

La présente invention concerne également une méthode de sécurisation d'un vol à basse altitude d'un aéronef qui est guidé automatiquement le long d'une trajectoire de vol comprenant une trajectoire latérale et une trajectoire verticale.

Selon l'invention, ladite méthode est remarquable en ce que :

- on détermine la largeur d'un corridor de sécurité, en mettant en oeuvre le procédé spécifié ci-dessus ;
- on détermine un corridor de sécurité, exempt de tout obstacle, qui présente ladite largeur et qui est délimité de part et d'autre de ladite trajectoire latérale ; et
- on guide l'aéronef automatiquement le long de ladite trajectoire de vol.

Ainsi, comme le corridor de sécurité est exempt de tout obstacle à la probabilité d'objectif près, notamment de toute partie de terrain telle qu'une crête par exemple, le risque de collision pour l'aéronef lors du vol à basse altitude le long de ladite trajectoire de vol est minimisé, tant que ledit aéronef reste dans ce corridor de sécurité, ce qui est évidemment le cas (avec une certaine probabilité que l'on peut minimiser) en raison du mode de détermination précité dudit corridor de sécurité qui présente une largeur suffisante, notamment lors de la survenue d'erreurs du type précité.

La présente invention concerne également un dispositif pour déterminer la largeur d'un corridor de sécurité qui est défini de part et d'autre de la trajectoire latérale d'une trajectoire de vol d'un aéronef.

Selon l'invention, ce dispositif comporte :

- des moyens permettant d'entrer (dans ledit dispositif) une pluralité d'erreurs qui présentent chacune un impact sur un vol automatique (et autonome) à basse altitude de l'aéronef ;
- des moyens pour déterminer une probabilité d'excursion du corridor de sécurité à ne pas dépasser ; et
- des moyens pour déterminer la largeur dudit corridor de sécurité, à partir desdites erreurs et de ladite probabilité d'excursion, en tenant compte d'au moins une expression mathématique liant ensemble au moins lesdites erreurs, ladite probabilité d'excursion et ladite largeur.

Par ailleurs, la présente invention concerne un système de sécurisation d'un vol à basse altitude d'un aéronef, du type comportant :

- des premiers moyens pour déterminer une trajectoire de vol comprenant une trajectoire latérale et une trajectoire verticale ; et
- des moyens de guidage pour guider automatiquement l'aéronef le long de ladite trajectoire de vol, comprenant également des moyens de navigation.

Selon l'invention, ce système de sécurisation comporte de plus :

- un dispositif tel que celui décrit précédemment, pour déterminer la largeur d'un corridor de sécurité ; et
- des deuxièmes moyens pour déterminer un corridor de sécurité, exempt de tout obstacle, qui présente ladite largeur déterminée par ledit dispositif et qui est délimité de part et d'autre de ladite trajectoire latérale.

Grâce audit corridor de sécurité, dont la largeur tient compte des erreurs susceptibles d'apparaître lors du vol, le système de sécurisation est en mesure de minimiser le risque de collision de l'aéronef avec le terrain. Le vol automatique à basse altitude de l'aéronef est donc sécurisé en partie, du moins pour les déviations latérales.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 illustre schématiquement dans un plan vertical des caractéristiques d'un corridor de sécurité.

La figure 3 est le schéma synoptique d'un système de sécurisation conforme à l'invention.

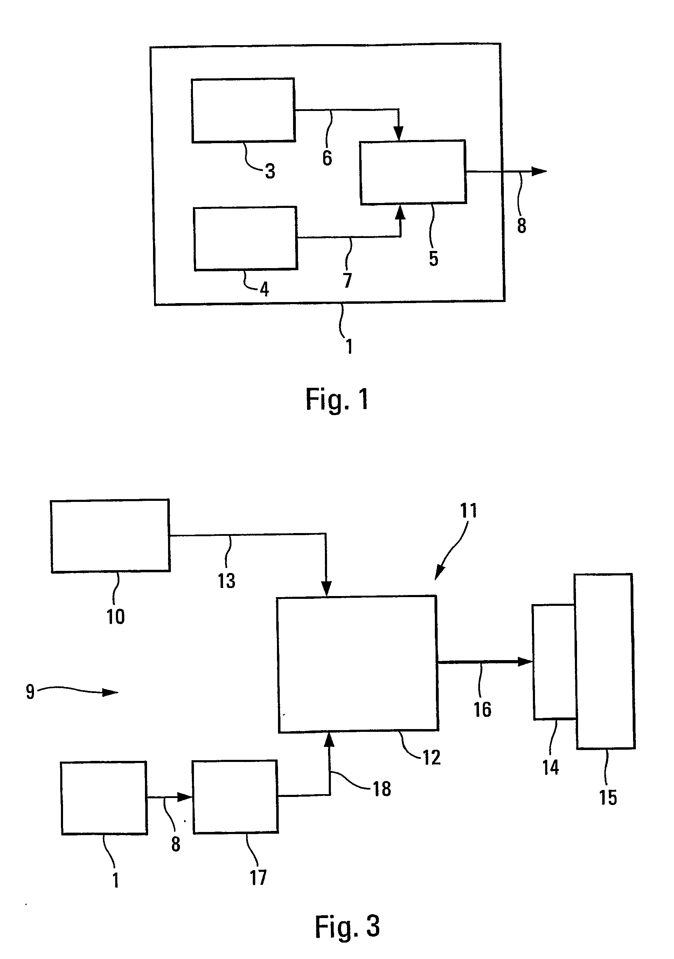

Le dispositif 1 conforme à l'invention et représenté schématiquement sur la figure 1 est destiné à déterminer la largeur D d'un corridor de sécurité CS qui est défini de part et d'autre de la trajectoire latérale TL d'une trajectoire de vol TO d'un aéronef A volant à basse altitude, en particulier un avion de transport militaire.

Selon l'invention, ledit dispositif 1 comporte :

- des moyens 3 permettant d'entrer dans le dispositif 1 une pluralité d'erreurs estimées, précisées ci-dessous, qui présentent chacune un impact sur un vol automatique (et autonome, c'est-à-dire sans utilisation d'un quelconque dispositif émissif tel qu'un radar) à basse altitude de l'aéronef A ;
- des moyens 4 pour déterminer une probabilité d'excursion du corridor de sécurité CS, à ne pas dépasser ; et
- des moyens 5 reliés respectivement par l'intermédiaire de liaisons 6 et 7 auxdits moyens 3 et 4, pour déterminer la largeur D dudit corridor de sécurité CS, à partir desdites erreurs et de ladite probabilité d'excursion, en tenant compte d'au moins une expression mathématique liant ensemble au moins lesdites erreurs, ladite probabilité d'excursion et ladite largeur D.

Dans un mode de réalisation préféré, le dispositif 1 peut tenir compte d'au moins certaines des erreurs suivantes (entrées à l'aide des moyens 3) :

- une erreur de navigation qui prend en compte le fait que la position donnée par un système de navigation embarqué ne correspond pas exactement à la position réelle de l'aéronef A ;
- une erreur de guidage qui prend en compte le fait qu'un pilote automatique (ou un directeur de vol et le pilote, dans le cas d'un vol par directeur de vol) asservit la position donnée par le système de navigation sur une trajectoire calculée par un système de gestion du vol. Cet asservissement présente une performance intrinsèque qui traduit l'aptitude du pilote automatique à guider l'aéronef A sur la trajectoire demandée (ou l'aptitude du directeur de vol et celle du pilote à le suivre) ; et
- une erreur de trajectoire de vol qui prend en compte le fait que la précision de la trajectoire de vol TO dépend de la précision de l'algorithme et du processeur d'un calculateur usuel qui détermine cette trajectoire de vol TO, et également de l'erreur (prépondérante) de la modélisation numérique du terrain 2 survolé, qui est utilisée pour ce faire par ce calculateur.

De plus, de préférence :

- l'erreur de navigation à la probabilité objectif est calculée en temps réel à bord par le système de navigation ;
- l'erreur de base de données terrain est en général contenue dans la base de données ou déclarée par défaut dans l'aéronef ; et
- l'erreur de guidage est définie par défaut une fois pour toutes dans l'aéronef.

Les erreurs précitées utilisées sont préalablement estimées sous la forme de densités de probabilité par les fournisseurs des systèmes concernés (de navigation, de guidage, ...) de l'aéronef A, et sont ensuite entrées à l'aide des moyens 3 pour être transmis auxdits moyens 5. De préférence, mais non exclusivement, lesdites densités de probabilité vérifient l'une des lois usuelles suivantes :

- une loi exponentielle ;
- une loi de Laplace-Gauss ;
- une loi de Poisson ; et
- une loi polynomiale.

Dans un mode de réalisation particulier, lesdits moyens 4 utilisent comme probabilité d'excursion $10^{-8}$/hdv, hdv représentant une heure de vol de l'aéronef A, c'est-à-dire que l'aéronef A présente alors une probabilité de $10^{-8}$ de risque de sortie (ou d'excursion) du corridor de sécurité CS par heure de vol, due à un écart latéral entre la position réelle de l'aéronef A et la trajectoire désirée.

Dans un mode de réalisation préféré, dans le cas de la prise en compte de deux erreurs différentes, lesdits moyens 5 utilisent comme expression mathématique :

$$P = 1 - 2\int_0^d \left( \int_{-\infty}^{+\infty} f1(x).f2(y-x).dx \right).dy \qquad (1)$$

dans laquelle :

- P représente ladite probabilité d'excursion ;
- d représente la moitié de ladite largeur D du corridor de sécurité CS ;
- f1 représente la densité de probabilité concernant une première desdites deux erreurs ; et
- f2 représente la densité de probabilité concernant la seconde erreur.

De façon générale, dans le cas de trois erreurs différentes de densités de probabilité individuelles respectives fi, lesdits moyens 5 utilisent également ladite expression mathématique précitée (1) permettant de calculer P en fonction de deux densités de probabilités f1 et f2 (qui sont globales dans ce cas), f1 correspondant à la densité de probabilité résultant de la somme de deux erreurs de densité de probabilité fi individuelle et f2 correspondant à la densité de probabilité individuelle fi de la troisième erreur restante.

Plus précisément, pour l'expression (1) précitée :

$$P = 1 - 2 \int_0^d \left( \int_{-\infty}^{+\infty} f1(x).f2(y-x).dx \right).dy$$

y peut représenter la somme de deux erreurs x1 +x2.

Comme P peut s'écrire $P = 1 - 2 \int_0^d f(y).dy$

où f représente la densité de probabilité de la variable aléatoire y=x1 +x2, on a alors pour la somme de trois erreurs x1 + x2 + x3 =y + x3

$$P = 1 - 2 \int_0^d \left( \int_{-\infty}^{+\infty} f(y).fz(z-x3).dx3 \right).dy$$

avec $f(y) = \int_{-\infty}^{+\infty} f1(x).f2(y-x)dx$

Le dispositif 1 conforme à l'invention calcule donc une largeur D de corridor de sécurité CS qui permet de tenir un objectif de probabilité de sortie de ce corridor de sécurité CS à ne pas dépasser, en prenant en compte les différentes erreurs qui présentent un impact sur la sécurité d'un vol automatique à basse altitude.

Dans un mode de réalisation particulier, pour lequel lesdites erreurs sont définies suivant une distribution gaussienne, c'est-à-dire sont exprimées sous forme d'une loi usuelle de Laplace-Gauss, la largeur D du corridor de sécurité CS correspond au double de la moyenne quadratique des limites desdites erreurs extrapolées à l'objectif de ladite probabilité d'excursion.

Dans ce cas, lesdits moyens 5 utilisent ladite expression mathématique suivante :

$$d = L(p).\sqrt{\sum_{i=1}^{n} \sigma i^2} \qquad\qquad (2)$$

dans laquelle :

- d représente ladite moitié de la largeur D du corridor de sécurité CS ;
- L(p) est un coefficient de largeur prédéterminée pour un objectif de probabilité de p/hdv, entièrement défini par la loi de Gauss et de manière unique [valable quelle que soit la distribution gaussienne définie par ($\sigma$, $\mu$)];
- les i représentent les erreurs prises en compte, qui sont supposées gaussiennes et indépendantes deux à deux ; et
- $\sigma i$ est l'écart-type de la distribution gaussienne d'une erreur i.

Le tableau suivant donne l'évolution de la limite L (ou coefficient de largeur) d'une erreur en fonction d'un objectif de probabilité. Il est formé pour une distribution de l'erreur avec $\sigma$= 1 mètre et $\mu$=0 mètre (distribution symétrique autour de TL).

| L | $\sigma$ | Probabilité pour que x soit entre L et -L ($\sigma$ donné = 1 mètre) |
|---|---|---|
| 0.674 | 1.0 | 0.5 |
| 1.000 | 1.0 | 0.68 |
| 1.645 | 1.0 | 0.9 |
| 1.960 | 1.0 | 0.95 |
| 2.000 | 1.0 | 0.9545 |
| 2.576 | 1.0 | 0.99 |
| 3.291 | 1.0 | 0.999 |
| 3.891 | 1.0 | 0.9999 |
| 4.417 | 1.0 | 0.99999 |

(suite)

| L | σ | Probabilité pour que x soit entre L et -L (σ donné = 1 mètre) |
|---|---|---|
| 4.892 | 1.0 | 0.999999 |
| 5.327 | 1.0 | 0.9999999 |
| 5.731 | 1.0 | 0.99999999 |
| 6.110 | 1.0 | 0.999999999 |

L'écart-type σ est choisi égal à 1 mètre pour des raisons de clarté. On peut en déduire que, pour une distribution gaussienne pour laquelle $\mu$ = 0 mètre et σ =1 mètre :

- la probabilité pour que l'erreur soit supérieure à une limite de $\pm$ 0,67 mètre est de 0,5 (c'est-à-dire 50% de chances d'être en dehors de cette limite) ;
- la probabilité pour que l'erreur soit supérieure à une limite de $\pm$ 1,96 mètre est de 0,05 (5%) ;
- la probabilité pour que l'erreur soit supérieure à une limite de $\pm$ 2 mètres est de 0,0455 (4,55%) ;
- ...
- la probabilité pour que l'erreur soit supérieure à une limite de $\pm$ 4,89 mètres est de $10^{-5}$;
- la probabilité pour que l'erreur soit supérieure à une limite de $\pm$ 5,32 mètres est de $10^{-6}$ ;
- la probabilité pour que l'erreur soit supérieure à une limite de $\pm$ 5,73 mètres est de $10^{-7}$ ; et
- la probabilité pour que l'erreur soit supérieure à une limite de $\pm$ 6,11 mètres est de $10^{-9}$.

On notera à titre d'exemple que la largeur de corridor correspondant à une probabilité de $10^{-9}$/hdv doit être 3,12 fois plus grande (6.110/1.960=3,12) que la largeur de corridor correspondant à une probabilité de $5.10^{-2}$/hdv.

Une autre particularité intéressante de cette distribution est que la probabilité d'excursion d'un corridor de sécurité CS de dimensions [- L ; + L] avec une loi de distribution gaussienne ayant un écart-type σ égal à 1 mètre, donné par le tableau ci-dessus, est égale à la probabilité d'une excursion d'un corridor qui est $\underline{p}$ fois plus large [- p.L ; +p.L] avec une loi de distribution gaussienne ayant un écart-type σ égal à $\underline{p}$ mètres.

Si l'on suppose que l'erreur de navigation ou de guidage est de type gaussien et qu'elle est caractérisée par une certaine limite avec une certaine probabilité, alors :

- d'abord, on détermine la distribution entière de cette erreur, en calculant un écart-type σ égal à $\underline{p}$ mètres (la moyenne $\mu$ de l'erreur étant nulle, puisque l'on a autant de chances que l'erreur de navigation ou de guidage soit d'un côté ou de l'autre de la trajectoire) ; et
- ensuite, on peut en déduire directement la probabilité d'excursion d'un corridor [- p.L ; +p.L], en remplaçant L par p.L dans le tableau ci-dessus (de manière à obtenir le tableau suivant).

| L | σ | Probabilité pour que x soit entre L et -L (σ donné = p mètres) |
|---|---|---|
| 0.674p | p | 0.5 |
| 1p | p | 0.68 |
| 1.645p | p | 0.90 |
| 1.960p | p | 0.95 |
| 2p | p | 0.95445 |
| 2.576p | p | 0.99 |
| 3.291 p | p | 0.999 |
| 3.891 p | p | 0.9999 |
| 4.417p | p | 0.99999 |
| 4.892p | p | 0.999996 |
| 5.327p | p | 0.9999999 |
| 5.731 p | p | 0.99999999 |

Par conséquent, si on connaît une limite d'erreur à une certaine probabilité, on déduit la limite de cette erreur à une autre probabilité en multipliant la première par le rapport des coefficients de largeur correspondants "L".

Ainsi, grâce à l'invention, il suffit :

- d'estimer les erreurs élémentaires (navigation, guidage, base de données, terrain, ...), ce qui permet dans le cas d'erreurs gaussiennes de déterminer l'écart-type $\sigma$ de chaque erreur [et sinon, de déterminer les densités de probabilité fi de l'expression mathématique (1) précitée] ;
- de spécifier le niveau de sécurité requis sous la forme d'une probabilité d'excursion du corridor de sécurité CS à ne pas dépasser (définie par exemple contractuellement entre le fabricant de l'aéronef A et le client) ; et
- d'en déduire la largeur D du corridor de sécurité CS de la manière précitée.

Quel que soit le mode de réalisation utilisé, on ajoute de préférence à ladite largeur D une marge tenant compte de l'envergure de l'aéronef A.

Jusqu'à présent, on a considéré une déviation de l'aéronef A due uniquement aux performances intrinsèques des systèmes de navigation et de guidage, ainsi qu'à la précision de la base de données du terrain, sans considération de panne d'un système (commandes de vol, moteur ...) de l'aéronef A pouvant induire une déviation supplémentaire.

Dans un mode de réalisation particulier, pour prendre en compte une telle déviation supplémentaire due à une panne système, le dispositif 1 conforme à l'invention prend en compte au moins une erreur qui est due à une panne d'au moins un système de l'aéronef.

On suppose que la panne i peut survenir avec une probabilité par heure de vol égale à $P_j$, et que cette panne induit une déviation latérale supplémentaire $\pm\, d_j$ (déviation discrète) à droite ou à gauche avec la même probabilité (soit $P_j/2$ pour chaque côté). Cette déviation latérale est supposée être toujours la même lorsque la panne survient.

Aussi, la probabilité P que la déviation totale de l'aéronef A (déviation due aux performances intrinsèques de ses systèmes représentée par une valeur TSE, plus celle due à une panne système) soit inférieure à $\underline{d}$ en valeur absolue est égale à la somme des probabilités suivantes :

- la probabilité que la panne système $\underline{j}$ arrive et induise une déviation $d_j$ vers la droite et que $(TSE+d_j) \in [-d, d]$, soit $TSE \in [-d - d_j ; d - d_j]$ ;
- la probabilité que la panne système $\underline{j}$ arrive et induise une déviation $d_j$ vers la gauche et que $(TSE - d_j) \in [-d ; d]$, soit $TSE \in [-d + d_j; d + d_j]$ ; et
- la probabilité que la panne système soit absente, mais que TSE soit inférieure à $\underline{d}$ en valeur absolue.

On notera que la variable TSE ("Total System Error" en anglais, c'est-à-dire erreur système totale) correspond à la somme des erreurs de navigation, de guidage et de trajectoire.

Ainsi, on a :

$$P = 1 - \left\{ P_j \left[ \int_0^{d-dj} f(y).dy + \int_0^{d+dj} f(y).dy \right] + (1 - P_j) \int_{-d}^{+d} f(y).dy \right\}$$

où f est la densité de probabilité de la variable aléatoire TSE

$$P = 1 - \left\{ P_j \sum \int_0^{d\pm dj} f(y).dy + (1 - P_j) \int_{-d}^{+d} f(y).dy \right\}$$

On peut étendre le raisonnement au cas de deux pannes simultanées $\underline{i}$ et i de probabilité $P_i$ et $P_j$ qui induisent des déviations de $\pm\, d_i$ et $\pm\, d_j$ respectivement.

La probabilité P que la déviation totale de l'aéronef A soit inférieure à $\underline{d}$ en valeur absolue est égale à la somme des probabilités suivantes :

- la probabilité que les pannes système $\underline{i}$ et $\underline{j}$ surviennent en même temps et que $(TSE \pm d_i \pm d_j) \in [-d ; d]$ ($\pm$ en fonction du sens de la déviation induite par chaque panne système, à iso-probabilité pour chaque cas) ;
- la probabilité que la panne système $\underline{i}$ soit présente alors que la panne systèmes $\underline{j}$ est absente, mais que $(TSE \pm d_i) \in [-d ; d]$ ($\pm$ en fonction du sens de la déviation induite par la panne système $\underline{i}$) ;
- la probabilité que la panne système $\underline{i}$ soit présente alors que la panne système $\underline{j}$ est absente, mais que $(TSE \pm d_j) \in [-d ; d]$ ($\pm$ en fonction du sens de la déviation induite par la panne système $\underline{j}$) ; et
- la probabilité que les pannes système $\underline{i}$ et $\underline{j}$ soient absentes, mais que TSE soit inférieure à $\underline{d}$ en valeur absolue.

On a donc :

$$P = 1 - \left\{ 2 \cdot \frac{P_i}{2} \cdot \frac{P_j}{2} \sum \int_0^{d \pm dj} f(y).dy + (1 - P_i)P_j \sum \int_0^{d \pm dj} f(y).dy + (1 - P_j)P_i \sum \int_0^{d \pm di} f(y).dy + 2(1 - P_i)(1 - P_j) \int_0^{d} f(y).dy \right\}$$

La largeur D (D = 2d) du corridor de sécurité CS ainsi déterminée par le dispositif 1, peut être utilisée par un système de sécurisation 9 d'un vol (automatique et autonome) à basse altitude d'un aéronef A, conforme à l'invention et représenté schématiquement sur la figure 3.

Ledit système 9 qui est donc destiné à mettre en oeuvre un vol automatique et autonome à basse altitude de l'aéronef A, est du type comportant :

- des moyens 10 usuels, par exemple un système de gestion de vol, pour déterminer de façon usuelle une trajectoire de vol TO comprenant une trajectoire latérale TL définie dans un plan horizontal et une trajectoire verticale (ou profil de vol) définie dans un plan vertical. Pour pouvoir réaliser un vol à basse altitude, la trajectoire de vol TO (à basse altitude) doit permettre à l'aéronef A de suivre au plus près le terrain survolé 2 ; et
- des moyens de guidage et de navigation 11 usuels pour guider automatiquement l'aéronef A le long de ladite trajectoire de vol TO. Dans un mode de réalisation préféré, lesdits moyens de guidage 11 comportent :

  ■ des moyens 1 2, par exemple un pilote automatique, qui sont reliés par une liaison 13 auxdits moyens 10 pour déterminer des ordres de pilotage de l'aéronef A de sorte qu'il suive ladite trajectoire de vol TO ; et
  ■ des moyens d'actionnement 14 d'organes commandés 15 tels que par exemple des gouvernes (de direction, de profondeur, ...) de l'aéronef A, moyens d'actionnement 14 qui sont reliés par une liaison 16 auxdits moyens 12 et auxquels on applique automatiquement les ordres de pilotage déterminés par ces derniers.

Lesdits moyens de guidage 11 peuvent également comporter un directeur de vol.

Pour sécuriser le vol à basse altitude, ledit système 9 comporte de plus :

- un dispositif 1 tel que celui spécifié ci-dessus, pour déterminer la largeur D d'un corridor de sécurité CS ; et
- des moyens 17 qui sont reliés par une liaison 8 audit dispositif 1 et par une liaison 18 auxdits moyens 12, pour déterminer un corridor de sécurité CS :

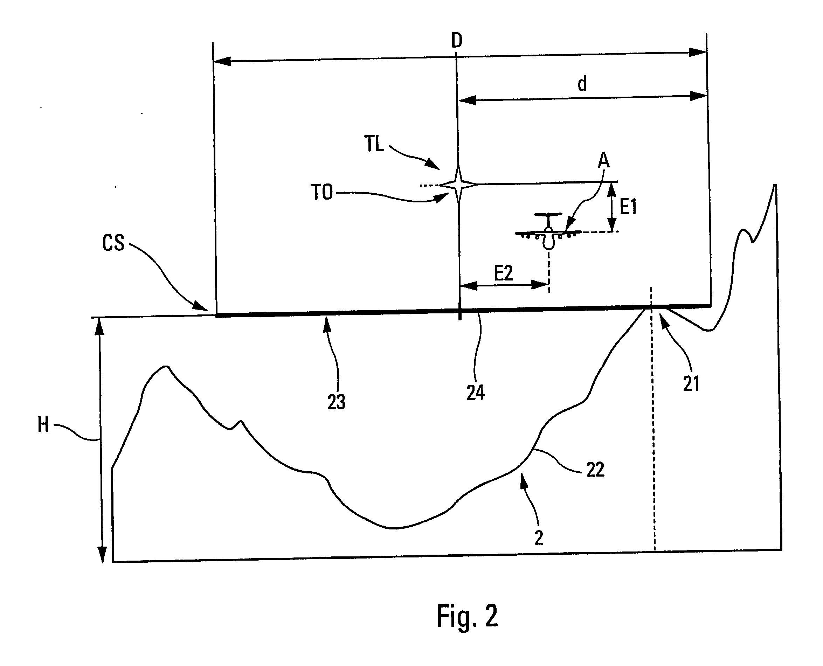

  ■ qui est exempt de tout obstacle ;
  ■ qui présente ladite largeur D déterminée par ledit dispositif 1 ; et
  ■ qui est délimité de part et d'autre de ladite trajectoire latérale TL et qui est centré sur cette dernière, comme représenté sur la figure 2.

Ainsi, comme le corridor de sécurité CS est exempt par définition de tout obstacle, notamment de toute partie de terrain 2 telle qu'une crête 21 par exemple, le risque de collision pour l'aéronef A lors du vol automatique à basse altitude le long de ladite trajectoire de vol TO est minimisé, tant que ledit aéronef A est maintenu dans ce corridor de sécurité CS. Or, ledit aéronef A est maintenu constamment dans ledit corridor de sécurité CS grâce à l'action desdits moyens de guidage automatique 11 et au fait que ledit corridor de sécurité CS tient compte par définition des erreurs susceptibles de survenir lors d'un tel vol automatique (qui est mis en oeuvre par lesdits moyens de guidage automatique 11).

Dans le plan latéral, le corridor de sécurité CS est donc centré sur la trajectoire latérale TL et est limité de part et d'autre par la distance d représentant la moitié de ladite largeur D.

Bien que cela ne fasse pas directement partie de l'objet de la présente invention, on notera également que, dans le plan vertical, ledit corridor de sécurité CS n'est pas délimité vers le haut, mais il est délimité vers le bas, par la partie la plus haute 21 du terrain 2 (dont on a représenté le relief 22 sur la figure 2) qui existe sous une surface 23 horizontale. Cette partie 21 présente une altitude H. Dans un mode de réalisation préféré, ladite surface 23 est déterminée, en tenant notamment compte des erreurs précitées.

De préférence, cette surface 23 présente la largeur D du corridor de sécurité CS. Aussi, dans la représentation de la figure 2 qui correspond à cette dernière situation, le corridor de sécurité CS et la surface 23 sont représentés par un seul et même segment de droite 24.

Le vol basse altitude automatique, mis en oeuvre par ledit système de sécurisation 9, permet donc de faire voler l'aéronef A, à une hauteur donnée au-dessus du terrain 2, en mode automatique, le long d'une trajectoire de vol TO calculée à partir d'une base numérique de terrain (préalablement chargée dans l'aéronef A), et ceci sans risque de collision avec le terrain 2.

**Revendications**

1. Procédé pour déterminer la largeur d'un corridor de sécurité (CS) qui est défini de part et d'autre de la trajectoire latérale (TL) d'une trajectoire de vol (TO) d'un aéronef (A),
   **caractérisé en ce que** :

   a) on estime une pluralité d'erreurs qui présentent chacune un impact sur un vol automatique à basse altitude de l'aéronef (A) ;
   b) on détermine une probabilité d'excursion du corridor de sécurité (CS) à ne pas dépasser ; et
   c) à partir desdites erreurs et de ladite probabilité d'excursion, on détermine la largeur (D) dudit corridor de sécurité (CS) en tenant compte d'au moins une expression mathématique liant ensemble au moins lesdites erreurs, ladite probabilité d'excursion et ladite largeur (D).

2. Procédé selon la revendication 1,
   **caractérisé en ce qu'**à l'étape a), on tient compte d'au moins certaines des erreurs suivantes :

   - une erreur de navigation ;
   - une erreur de guidage ;
   - une erreur de trajectoire de vol.

3. Procédé selon l'une des revendications 1 et 2,
   **caractérisé en ce que** lesdites erreurs sont estimées sous forme de densités de probabilité.

4. Procédé selon la revendication 3,
   **caractérisé en ce que** lesdites densités de probabilité vérifient l'une des lois suivantes :

   - une loi exponentielle ;
   - une loi de Laplace-Gauss ;
   - une loi de Poisson ;
   - une loi polynomiale.

5. Procédé selon l'une quelconque des revendications 1 à 4, **caractérisé en ce que** ladite probabilité d'excursion vaut $10^{-8}$/hdv, hdv représentant une heure de vol de l'aéronef (A).

6. Procédé selon l'une quelconque des revendications précédentes, **caractérisé en ce que**, dans le cas de deux erreurs différentes, ladite expression mathématique correspond à :

$$P = 1 - 2\int_0^d \left( \int_{-\infty}^{+\infty} f1(x).f2(y-x).dx \right).dy$$

dans laquelle :

   - P représente ladite probabilité d'excursion ;
   - d représente la moitié de ladite largeur (D) du corridor de sécurité (CS) ;
   - f1 représente la densité de probabilité concernant une première desdites erreurs ; et
   - f2 représente la densité de probabilité concernant la seconde erreur.

7. Procédé selon la revendication 6,
   **caractérisé en ce que**, dans le cas de trois erreurs différentes de densités de probabilité individuelles respectives fi, on utilise également ladite expression mathématique permettant de calculer P en fonction de deux densités de probabilité f1 et f2, f1 correspondant à la densité de probabilité résultant de la somme de deux erreurs de densité de probabilité individuelle fi et f2 à la densité de probabilité individuelle fi de la troisième erreur restante.

8. Procédé selon l'une quelconque des revendications précédentes, **caractérisé en ce que** lesdites erreurs sont exprimées sous forme d'une loi de Laplace-Gauss, et **en ce que** la largeur (D) du corridor de sécurité (CS) correspond au double de la moyenne quadratique des limites desdites erreurs extrapolées à l'objectif de ladite probabilité d'excursion.

9. Procédé selon la revendication 8,
**caractérisé en ce que** ladite expression mathématique correspond à :

$$d = L(p) \cdot \sqrt{\sum_{i=1}^{n} \sigma i^2}$$

dans laquelle :

    - d représente la moitié de ladite largeur (D) du corridor de sécurité (CS) ;
    - L(p) est un coefficient d'expansion qui dépend d'une probabilité p de survenue d'une erreur ; et
    - σi est l'écart-type de la distribution gaussienne d'une erreur i.

10. Procédé selon l'une quelconque des revendications précédentes,
**caractérisé en ce que** l'on ajoute à ladite largeur (D) une marge tenant compte de l'envergure de l'aéronef (A).

11. Procédé selon l'une quelconque des revendications précédentes,
**caractérisé en ce que** l'on prend en compte au moins une erreur qui est due à une panne d'au moins un système de l'aéronef (A).

12. Méthode de sécurisation d'un vol à basse altitude d'un aéronef (A) qui est guidé le long d'une trajectoire de vol (TO) comprenant une trajectoire latérale (TL) et une trajectoire verticale,
**caractérisé en ce que** :

    - on détermine la largeur (D) d'un corridor de sécurité (CS), en mettant en oeuvre le procédé spécifié sous l'une quelconque des revendications 1 à 11;
    - on détermine un corridor de sécurité (CS), exempt de tout obstacle, qui présente ladite largeur (D) et qui est délimité de part et d'autre de ladite trajectoire latérale (TL) ; et
    - on guide l'aéronef (A) automatiquement le long de ladite trajectoire de vol (TO).

13. Dispositif pour déterminer la largeur d'un corridor de sécurité (CS) qui est défini de part et d'autre de la trajectoire latérale (TL) d'une trajectoire de vol (TO) d'un aéronef (A),
**caractérisé en ce qu'**il comporte :

    - des moyens (3) permettant d'entrer une pluralité d'erreurs qui présentent chacune un impact sur un vol automatique à basse altitude de l'aéronef (A) ;
    - des moyens (4) pour déterminer une probabilité d'excursion du corridor de sécurité (CS) à ne pas dépasser ; et
    - des moyens (5) pour déterminer la largeur (D) dudit corridor de sécurité (CS), à partir desdites erreurs et de ladite probabilité d'excursion, en tenant compte d'au moins une expression mathématique liant ensemble au moins lesdites erreurs, ladite probabilité d'excursion et ladite largeur (D).

14. Système de sécurisation d'un vol à basse altitude d'un aéronef (A), ledit système (9) comportant :

    - des premiers moyens (10) pour déterminer une trajectoire de vol (TO) comprenant une trajectoire latérale (TL) et une trajectoire verticale ; et
    - des moyens de guidage (11) pour guider automatiquement l'aéronef (A) le long de ladite trajectoire de vol (TO), comprenant également des moyens de navigation,

**caractérisé en ce qu'**il comporte de plus :

    - un dispositif (1) tel que celui spécifié sous la revendication 13, pour déterminer la largeur (D) d'un corridor de sécurité (CS) ; et
    - des deuxièmes moyens (17) pour déterminer un corridor de sécurité (CS), exempt de tout obstacle, qui présente ladite largeur (D) déterminée par ledit dispositif (1) et qui est délimité de part et d'autre de ladite trajectoire latérale (TL).

**15.** Aéronef,
**caractérisé en ce qu'**il comporte un dispositif (1) tel que celui spécifié sous la revendication 13.

**16.** Aéronef,
**caractérisé en ce qu'**il comporte un système (9) tel que celui spécifié sous la revendication 14.

**Claims**

**1.** A method for determining the width of a safety corridor (CS) which is defined on either side of the lateral trajectory (TL) of a flight trajectory (TO) of an aircraft (A),
**characterized in that**

a) a plurality of errors is estimated, each having an impact on a low-altitude automatic flight of the aircraft (A);
b) a probability of excursion from the safety corridor (CS) not to be exceeded is determined; and
c) on the basis of said errors and of said probability of excursion, the width (D) of said safety corridor (CS) is determined taking account of at least one mathematical expression interrelating at least said errors, said probability of excursion and said width (D).

**2.** The method as claimed in claim 1,
**characterized in that** in step a), at least some of the following errors are taken into account:

- a navigation error;
- a guidance error;
- a flight trajectory error.

**3.** The method as claimed in one of claims 1 and 2,
**characterized in that** said errors are estimated in the form of probability densities.

**4.** The method as claimed in claim 3,
**characterized in that** said probability densities satisfy one of the following laws:

- an exponential law;
- a Laplace-Gauss law;
- a Poisson law;
- a polynomial law.

**5.** The method as claimed in any one of claims 1 to 4,
**characterized in that** said probability of excursion equals $10^{-8}$/hdv, hdv representing an hour of flight of the aircraft (A).

**6.** The method as claimed in any one of the preceding claims,
**characterized in that**, in the case of two different errors, said mathematical expression corresponds to:

$$P = 1 - 2 \int_0^d \left( \int_{-\infty}^{+\infty} f1(x).f2(y - x).dx \right).dy$$

in which:

- P represents said probability of excursion;
- d represents half said width (D) of the safety corridor (CS);
- f1 represents the probability density relating to a first of said errors; and
- f2 represents the probability density relating to the second error.

7. The method as claimed in claim 6,
**characterized in that**, in the case of three different errors of respective individual probability densities fi, use is also made of said mathematical expression making it possible to calculate P as a function of two probability densities f1 and f2, f1 corresponding to the probability density resulting from the sum of two errors of individual probability density fi and f2 to the individual probability density fi of the third remaining error.

8. The method as claimed in any one of the preceding claims,
**characterized in that** said errors are expressed in the form of a Laplace-Gauss law, and **in that** the width (D) of the safety corridor (CS) corresponds to twice the quadratic mean of the limits of said errors extrapolated to the objective of said probability of excursion.

9. The method as claimed in claim 8,
**characterized in that** said mathematical expression corresponds to:

$$d = L(p) . \sqrt{\sum_{i=1}^{n} \sigma i^2}$$

in which:

   - d represents half said width (D) of the safety corridor (CS);
   - L(p) is an expansion coefficient which depends on a probability $\underline{p}$ of occurrence of an error; and
   - σi is the standard deviation of the Gaussian distribution of an error $\underline{i}$.

10. The method as claimed in any one of the preceding claims,
**characterized in that** a margin taking account of the wingspan of the aircraft (A) is added to said width (D).

11. The method as claimed in any one of the preceding claims,
**characterized in that** at least one error which is due to a fault with at least one system of the aircraft (A) is taken into account.

12. A process for securing a low-altitude flight of an aircraft (A) which is guided along a flight trajectory (TO) comprising a lateral trajectory (TL) and a vertical trajectory,
**characterized in that**:

   - the width (D) of a safety corridor (CS) is determined by implementing the method specified under any one of claims 1 to 11;
   - a safety corridor (CS), free of any obstacle, is determined which exhibits said width (D) and which is delimited on either side of said lateral trajectory (TL); and
   - the aircraft (A) is guided automatically along said flight trajectory (TO).

13. A device for determining the width of a safety corridor (CS) which is defined on either side of the lateral trajectory (TL) of a flight trajectory (TO) of an aircraft (A),
**characterized in that** it comprises:

   - means (3) making it possible to input a plurality of errors which each have an impact on a low-altitude automatic flight of the aircraft (A);
   - means (4) for determining a probability of excursion from the safety corridor (CS) not to be exceeded; and
   - means (5) for determining the width (D) of said safety corridor (CS), on the basis of said errors and of said probability of excursion, taking account of at least one mathematical expression interrelating at least said errors, said probability of excursion and said width (D).

14. A system for securing a low-altitude flight of an aircraft (A), said system (9) comprising:

   - first means (10) for determining a flight trajectory (TO) comprising a lateral trajectory (TL) and a vertical trajectory; and
   - means of guidance (11) for automatically guiding the aircraft (A) along said flight trajectory (TO), also comprising navigation means,

**characterized in that** it moreover comprises:

- a device (1) such as that specified under claim 13, for determining the width (D) of a safety corridor (CS); and
- second means (17) for determining a safety corridor (CS), free of any obstacle, which exhibits said width (D) determined by said device (1) and which is delimited on either side of said lateral trajectory (TL).

**15.** An aircraft,
**characterized in that** it comprises a device (1) such as that specified under claim 13.

**16.** An aircraft,
**characterized in that** it comprises a system (9) such as that specified under claim 14.

**Patentansprüche**

**1.** Verfahren zum Bestimmen der Breite eines Sicherheitskorridors (CS), der beiderseits der seitlichen Flugbahn (TL) einer Flugbahn (TO) eines Luftfahrzeugs (A) definiert wird,
**dadurch gekennzeichnet, dass**:

a) man eine Vielzahl von Fehlern einschätzt, die jeweils eine Auswirkung auf einen automatischen Flug des Luftfahrzeugs (A) in geringer Höhe darstellen;
b) man eine Exkursionswahrscheinlichkeit des Sicherheitskorridors (CS) bestimmt, die es nicht zu überschreiten gilt; und
c) man ausgehend von den besagten Fehlern und der besagten Exkursionswahrscheinlichkeit die Breite (D) des besagten Sicherheitskorridors (CS) bestimmt, indem man zumindest eine mathematische Formel berücksichtigt, die zumindest die besagten Fehler, die besagte Exkursionswahrscheinlichkeit und die besagte Breite (D) miteinander verbindet.

**2.** Verfahren nach Anspruch 1,
**dadurch gekennzeichnet, dass** man im Schritt a) zumindest einige der folgenden Fehler berücksichtigt:

- einen Navigationsfehler;
- einen Leitungsfehler;
- einen Flugbahnfehler.

**3.** Verfahren nach einem der Ansprüche 1 und 2,
**dadurch gekennzeichnet, dass** die besagten Fehler in Form von Wahrscheinlichkeitsdichten eingeschätzt werden.

**4.** Verfahren nach Anspruch 3,
**dadurch gekennzeichnet, dass** die besagten Wahrscheinlichkeitsdichten eines der folgenden Gesetze überprüfen:

- eine Exponentialverteilung;
- eine Laplace-Gauß-Verteilung;
- eine Poisson-Verteilung;
- eine Polynominalverteilung.

**5.** Verfahren nach irgendeinem der Ansprüche 1 bis 4,
**dadurch gekennzeichnet, dass** die besagte Exkursionswahrscheinlichkeit gleich $10^{-8}$/hdv ist, wobei hdv eine Flugstunde des Luftfahrzeugs (A) darstellt.

**6.** Verfahren nach irgendeinem der vorherigen Ansprüche,
**dadurch gekennzeichnet, dass** sich die mathematische Formel im Falle von zwei unterschiedlichen Fehlern folgendermaßen darstellt:

$$P = 1 - 2\int_0^d \left( \int_{-\infty}^{+\infty} f1(x).f2(y - x).dx \right).dy$$

wobei:

- P die besagte Exkursionswahrscheinlichkeit darstellt;
- d die Hälfte der besagten Breite (D) des Sicherheitskorridors (CS) darstellt;
- f1 die Wahrscheinlichkeitsdichte betreffend einen ersten der besagten Fehler darstellt; und
- f2 die Wahrscheinlichkeitsdichte betreffend den zweiten Fehler darstellt.

**7.** Verfahren nach Anspruch 6,
**dadurch gekennzeichnet, dass** man im Falle von drei unterschiedlichen Fehlern von jeweiligen einzelnen Wahrscheinlichkeitsdichten fi ebenfalls die besagte mathematische Formel zur Berechnung von P in Abhängigkeit von den beiden Wahrscheinlichkeitsdichten f1 und f2 anwendet, wobei f1 jener Wahrscheinlichkeitsdichte entspricht, die sich aus der Summe von zwei Fehlern der jeweiligen einzelnen Wahrscheinlichkeitsdichte fi ergibt, und f2 der einzelnen Wahrscheinlichkeitsdichte fi des dritten verbleibenden Fehlers entspricht.

**8.** Verfahren nach irgendeinem der vorherigen Ansprüche,
**dadurch gekennzeichnet, dass** die besagten Fehler in Form einer Laplace-Gauß-Verteilung ausgedrückt werden, und dadurch, dass die Breite (D) des Sicherheitskorridors (CS) dem Doppelten des quadratischen Mittels der Grenzen der besagten aus dem Ziel der besagten Exkursionswahrscheinlichkeit extrapolierten Fehler entspricht.

**9.** Verfahren nach Anspruch 8,
**dadurch gekennzeichnet, dass** sich die besagte mathematische Formel folgendermaßen darstellt:

$$d = L(p).\sqrt{\sum_{i=1}^{n} \sigma i^2}$$

wobei:

- d die Hälfte der besagten Breite (D) des Sicherheitskorridors (CS) darstellt;
- L(p) ein Erweiterungsbeiwert ist, der von einer Wahrscheinlichkeit $\underline{p}$ des Auftretens eines Fehlers abhängt; und
- σi die Standard-Abweichung der Gauss-Verteilung eines Fehlers $\underline{i}$ ist.

**10.** Verfahren nach irgendeinem der vorherigen Ansprüche,
**dadurch gekennzeichnet, dass** man zur besagten Breite (D) eine Toleranz hinzufügt, die die Spannweite des Luftfahrzeugs (A) berücksichtigt.

**11.** Verfahren nach irgendeinem der vorherigen Ansprüche,
**dadurch gekennzeichnet, dass** man zumindest einen Fehler berücksichtigt, der auf eine Panne zumindest eines Systems des Luftfahrzeugs (A) zurückzuführen ist.

**12.** Methode zur Absicherung eines Fluges eines Luftfahrzeugs (A) in geringer Höhe, das entlang einer Flugbahn (TO) umfassend eine seitliche Flugbahn (TL) und eine vertikale Flugbahn geleitet wird,
**dadurch gekennzeichnet, dass**:

- man die Breite (D) eines Sicherheitskorridors (CS) bestimmt, indem man das Verfahren anwendet, das in einem der Ansprüche 1 bis 11 spezifiziert wird;
- man einen Sicherheitskorridor (CS) ohne jedwedes Hindernis bestimmt, der die besagte Breite (D) darstellt und beiderseits der besagten seitlichen Flugbahn (TL) eingegrenzt wird; und
- man das Luftfahrzeug (A) automatisch entlang der besagten Flugbahn (TO) leitet.

**13.** Vorrichtung zum Bestimmen der Breite eines Sicherheitskorridors (CS), der beiderseits der seitlichen Flugbahn (TL) einer Flugbahn (TO) eines Luftfahrzeugs (A) definiert wird,
**dadurch gekennzeichnet, dass** sie folgendes umfasst:

- Vorrichtungen (3) zum Eingeben einer Vielzahl von Fehlern, die jeweils eine Auswirkung auf einen automatischen Flug des Luftfahrzeugs (A) in geringer Höhe darstellen;
- Vorrichtungen (4) zum Bestimmen einer Exkursionswahrscheinlichkeit des Sicherheitskorridors (CS), die es nicht zu überschreiten gilt; und
- Vorrichtungen (5) zum Bestimmen der Breite (D) des besagten Sicherheitskorridors (CS) ausgehend von den besagten Fehlern und der besagten Exkursionswahrscheinlichkeit, indem man zumindest eine mathematische Formel berücksichtigt, die zumindest die besagten Fehler, die besagte Exkursionswahrscheinlichkeit und die besagte Breite (D) miteinander verbindet.

**14.** System zur Absicherung eines Fluges eines Luftfahrzeugs (A) in geringer Höhe, wobei das besagte System (9) folgendes umfasst:

- erste Vorrichtungen (10) zum Bestimmen einer Flugbahn (TO) umfassend eine seitliche Flugbahn (TL) und eine vertikale Flugbahn; und
- Leitvorrichtungen (11) zum automatischen Leiten des Luftfahrzeugs (A) entlang der besagten Flugbahn (TO), die auch Navigationsvorrichtungen umfassen,

**dadurch gekennzeichnet, dass** es darüber hinaus folgendes umfasst:

- eine Vorrichtung (1), wie sie im Anspruch 13 spezifiziert ist, zum Bestimmen der Breite (D) eines Sicherheitskorridors (CS); und
- zweite Vorrichtungen (17) zum Bestimmen eines Sicherheitskorridors (CS) ohne jedwedes Hindernis, der die besagte Breite (D) darstellt, die durch die besagte Vorrichtung (1) bestimmt wird, und beiderseits der besagten seitlichen Flugbahn (TL) eingegrenzt wird.

**15.** Luftfahrzeug,
**dadurch gekennzeichnet, dass** es eine Vorrichtung (1) umfasst, wie sie im Anspruch 13 spezifiziert ist.

**16.** Luftfahrzeug,
**dadurch gekennzeichnet, dass** es ein System (9) umfasst, wie es im Anspruch 14 spezifiziert ist.

Fig. 1

Fig. 3

Fig. 2

EP 1 844 374 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5922031 A